# NEUE EUROPÄISCHE PATENTSCHRIFT

(11) **EP 0 363 615 B2**
(45) Veröffentlichungstag und Bekanntmachung des Hinweises auf die Entscheidung über den Einspruch: **13.10.1999**
(45) Hinweis auf die Patenterteilung: 02.02.1994
(21) Anmeldenummer: 89115654.9
(22) Anmeldetag: 25.08.1989
(51) Int. Cl.: B60T 7/20, B60T 13/68, B60T 15/20, B60T 15/46

(54) **Druckluftbremseinrichtung**
Compressed-air brake system
Installation de freinage à air comprimé

(30) Priorität: 08.10.1988 DE 3834282; 20.06.1989 DE 3920096
(43) Veröffentlichungstag der Anmeldung: 18.04.1990
(73) Patentinhaber: KNORR-BREMSE Systeme für Nutzfahrzeuge GmbH, 80809 München (DE)
(72) Erfinder: Beck, Siegfried, D-7000 Stuttgart 80 (DE); Grauel, Ingolf, Dipl.-Ing., D 7143 Vaihingen/Enz (DE); Stumpe, Werner, Dipl.-Ing., D-7000 Stuttgart 50 (DE); Wrede, Jürgen, Dipl.-Ing., D-7000 Stuttgart 50 (DE)
(74) Vertreter: von Bülow, Tam, Dr.

(56) Entgegenhaltungen:
- EP-A- 0 146 769
- EP-A- 0 231 829
- WO-A-87/05571
- DE-A- 3 149 110
- DE-A- 3 428 192
- DE-A- 3 502 051
- FR-A- 2 517 610

## Beschreibung

### Stand der Technik

Die Erfindung geht aus von einer Druckluftbremseinrichtung nach der Gattung des Hauptanspruchs. Eine derartige Druckluftbremseinrichtung ist aus EP 0231829 bekannt. Diese hat ein Anhängersteuerventil, welches mittels eines Betriebsbremsventils über zwei pneumatische Bremssteuerkreise des Zugfahrzeugs ansteuerbar ist. Bei dieser Druckluftbremseinrichtung ist in einer Anhängerbremsleitung ein Korrekturventil angeordnet, welches von einem Deichselkraftsensorsignal gesteuert ist, das den an der Anhängerkupplung auftretenden Kräften entspricht. Das Korrekturventil ändert während der Bremsungen den Druck in der Anhängerbremsleitung in die notwendige Richtung. Beim Korrekturventil ist in Ausgangsstellung die Anhängerbremsleitung mit dem Anhängerbremsventil verbunden, zu dem auch eine Anhängervorratsleitung führt. Die Anhängervorratsleitung seinerseits ist mit dem Anhängersteuerventil verbunden, zu dem eine Leitung führt, die mit einem Druckvorratsbehälter verbunden ist. Bei Erregung oder Betätigung des Korrekturventils wird eine Verbindung von der dem Druckluftvorratsbehälter kommenden Leitung zur zum Anhängerbremsventil führenden Anhängerbremsleitung hergestellt. Dadurch stellt sich in der Anhängerbremsleitung ein höherer Druck ein.

Während der Anpassungen bzw. Bremsungen und nach Erreichen des Mindestdrucks wird eine Auswertelektronik aktiviert, die Signale vom Deichselkraftsensor erhält und bei Auflaufkräften das Korrekturventil ansteuert, so daß es zu einer Druckerhöhung in der Anhängerbremsleitung kommt. Bei zu starker Bremswirkung des Anhängers wird das Korrekturventil über die Einrichtung Deichselkraftsensor - Auswertelektronik und Korrekturventil angesteuert, so daß sich der Druck vermindert.

Bei derartigen Fahrzeugen mit Zug- und Anhängerfahrzeug, gegebenenfalls einem Sattelzug, ist die Abstimmung der Bremskräfte zwischen ziehendem und gezogenem Fahrzeug ein Problem. Anzustreben ist eine möglichst gleichmäßige Bremsbelastung von Zug- und Anhängerfahrzeug.

Problematisch ist auch die Anhängerbremsung bei Bruch der Anhängerbremsleitung.

Bei einem zusätzlichen elektrischen Stellglied (Korrekturventil) werden Leitungen, Kolben, Dichtungen usw. benötigt, die weitere Kosten verursachen und Fehlerquellen eröffnen.

### Vorteile der Erfindung

Die Druckluftbremseinrichtung mit den kennzeichnenden Merkmalen des Hauptanspruchs hat demgegenüber den Vorteil, daß kein separates Stellglied in der Bremsleitung oder in einem gesonderten Gehäuse unterzubringen ist.

Erfindungsgemäß fällt einer der beiden pneumatischen Steuerkreise im Anhängersteuerventil weg und wird durch einen elektrischen Steuerkreis ersetzt. Der elektrische Steuerkreis, der die elektrischen Mittel ansteuert, ist zusammen mit dem verbleibenden pneumatischen Steuerkreis (dem Rückhaltekreis) und der Ansteuerung der Feststellbremse in einem Gehäuse integriert. Es ist daher kein weiteres Gehäuse für ein zusätzliches Stellglied erforderlich. Das Gehäuse, in dem die elektrischen Mittel eingebaut sind, hat im wesentlichen die gleiche Größe wie ein bisheriges Anhängersteuerventil. Die ganzen Einrichtungen für den zweiten Steuerkreis sind im gleichen Gehäuse angeordnet, daher fallen Leitungen, Kolben, Dichtungen und Verbindungselemente usw. weg, was zu einem erheblich einfacheren und preiswerteren Aufbau führt.

Die Bremseinrichtung zeichnet sich in vorteilhafter Weise aufgrund der elektrischen Betätigung des Anhängersteuerventils durch ein sehr schnelles Zeitverhalten aus, weil die Signalübertragung zum Anhängerbremsventil beschleunigt wird. Darüber hinaus ist das dem Anhängersteuerventil zuführbare elektrische Signal auf einfache Weise durch elektronische oder elektrisch - mechanische Mittel zu modifizieren, beispielsweise zum Zwecke einer achslast- oder fahrzeugmasseabhängigen Bremsdruckregelung oder einer Regelung in Abhängigkeit vom Bremsverhalten des Anhängerfahrzeugs.

Durch die in den Unteransprüchen aufgeführten Maßnahmen sind vorteilhafte Weiterbildungen und Verbesserungen der im Hauptanspruch angegebenen Druckluftbremseinrichtung möglich.

So ist das in bekannter Weise wenigstens einen Steuerkolben aufweisende Anhängersteuerventil durch ein Vorsteuerventil betätigbar, dessen Ansteuerung durch einen Elektromagneten, einen elektrischen Linearmotor, einen elektrischen Schrittmotor ggf. mit Rückmeldung des Ventilhubes erfolgen kann.

Darüber hinaus kann nach einer Weiterbildung der Erfindung der elektrisch aktivierbare Bremssteuerkreis eine Magnetventileinrichtung aufweisen, die sich bei normalen Kräften zwischen Zugfahrzeug und Anhängerfahrzeug inaktiv verhält, dagegen bei unzulässig großen Zug- oder Druckkräften an der mechanischen Kupplungsverbindung der Fahrzeuge steuernd auf den Bremsdruck in der Anhängerbremsleitung einwirkt.

Ferner ist in vorteilhafter Weise und mit großer Sicherheit der Bruch der Anhängerbremsleitung erkennbar durch eine bestimmte Logikschaltung im Steuergerät oder durch einen Drucksensor in der Anhängerbremsleitung.

### Zeichnung

Ein Ausführungsbeispiel der Erfindung ist in der Zeichnung dargestellt und in der Figurenbeschreibung näher erläutert. Es zeigen:
Figur 1 eine deichselkraftgeregelte Ansteuerung der Anhängerbremse;
Figur 2 die Schalteinrichtung eines Stellglieds.

### Beschreibung des Ausführungsbeispiels

Das im Zugfahrzeug eingebaute Anhängersteuerventil steuert bei Zweileitungsbremsanlagen die Betriebsbremse des Anhängers an. Dieses mehrkreisige Ventil wird von beiden Betriebsbremskreisen und von der Feststellbremse angesteuert.

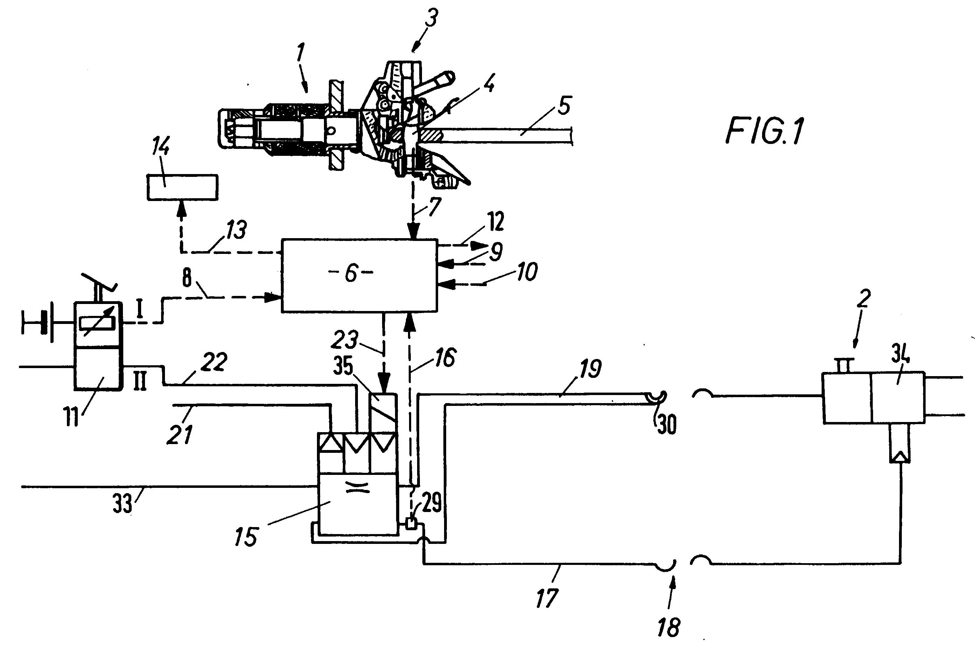

Figur 1 zeigt eine Anordnung mit Zugfahrzeug 1 und Anhängerfahrzeug 2. Am Zugfahrzeug 1 ist eine Anhängerkupplung 3 mit vertikal bewegbarem Kupplungsbolzen 4 fest angeordnet. Der Kupplungsbolzen 4 ist durch die Öse der Anhängerdeichsel 5 steckbar. Im Kupplungsbolzen 4 ist ein nicht dargestellter Sensor zur Erfassung der Deichselkraft angeordnet. Die Signale dieses Sensors, die entsprechend verstärkt werden, werden durch eine Leitung 7 einer elektronischen Steuerung 6 zugeleitet. In die elektronische Steuerung 6 führt eine Signalleitung 8, die von einem Bremswertgeber 11 des Zugfahrzeugs kommt. Der Bremswertgeber 11 steuert einen elektrischen Bremssteuerkreis I und einen pneumatischen Bremssteuerkreis II des Zugfahrzeugs. Eine weitere Signalleitung 9, die Signale von der Stellung der Motorbremsklappe übermittelt, führt gleichfalls in die elektronische Steuerung 6. Weiterhin führt eine Signalleitung 10 in die elektronische Steuerung 6. Über diese Signalleitung 10 werden die Signale geleitet, die die Fahrzeuggeschwindigkeit anzeigen.

Von der elektronischen Steuerung 6 weg führt eine Leitung 12 zum Antiblockiersystem-Signalgeber. Außerdem führt eine Leitung 13 zu einer Anzeige 14, die im Führerhaus des Zugfahrzeugs angeordnet sein kann. Ferner ist auf dem Zugfahrzeug ein Anhängersteuerventil 15 vorhanden. Dieses ist durch eine Leitung 33 an eine nicht gezeichnete Druckluftquelle angeschlossen. Das Ventil 15 ist mit einer Bremsleitung 17 verbunden, die zur Kupplung 18 der Bremsleitungen zwischen Zug- und Anhängerfahrzeug führt. In dieser Leitung ist ein Drucksensor 29 angeordnet. Von diesem führt eine Signalleitung 16 zur elektronischen Steuerung 6. Eine weitere Leitung, die vom Anhängersteuerventil 15 wegführt, ist die Vorratsleitung 19, die zum Kupplungskopf 30 der Anhängervorratsleitung führt. Wird die Vorratsleitung 19 entlüftet (z. B. durch Bruch der Leitung), dann bremst der ein Bremsventil 34 aufweisende Anhänger selbsttätig ein.

In das Anhängersteuerventil 15 führen eine Steuerleitung 21 eines nicht dargestellten Feststellbremsventils und eine Steuerleitung 22 des Betriebsbremsventils 11. Letztlich führt in das Anhängersteuerventil 15 eine elektrische Zuleitung 23, über die das Anhängersteuerventil 15 gesteuert wird. Das Anhängersteuerventil 15 arbeitet erfindungsgemäß als Stellglied und ist ein modifiziertes Anhängersteuerventil. Während bekannte Anhängersteuerventile mit drei pneumatischen Steuerkreisen arbeiten, erfolgt vorliegend die Ansteuerung einer der beiden Betriebsbremssteuerkreise durch die Leitung 23. In vorteilhafter Weise fällt somit die bisherige pneumatische Ansteuerung des Bremssteuerkreises weg und wird durch die Aktivierung elektrischer Mittel, z.B. durch ein im Anhängersteuerventil integriertes Magnetventil, das ein Proportional- oder Taktventil sein kann, oder durch eine Kombination von Magnetventilen, ersetzt. Das Magnetventil 35 ist ein an sich bekanntes, elektromagnetisch ansteuerbares Vorsteuerventil, welches auf einen Steuerkolben des Anhängersteuerventils 15 einzuwirken vermag. Als Betätigungsmittel des Ansteuerventils 15 kann auch ein elektrischer Linearmotor, ein elektrischer Schrittmotor ggf. mit Rückmeldung des Ventilhubes in Frage kommen. Die Betätigung des Steuerkolbens kann ferner mit einem Magnetventil für Druckeinsteuerung und einem Magnetventil für Druckabbausteuerung sowie einem Sensor für den eingesteuerten Druck erfolgen. Gegebenenfalls kann eine Kombination dieser Mittel Verwendung finden.

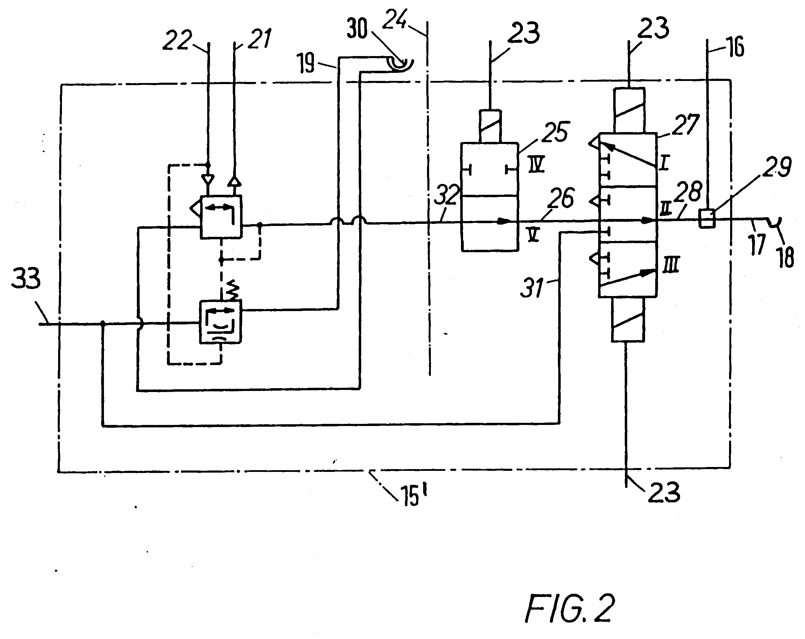

Figur 2 zeigt das Schaltbild eines abweichend gestalteten Anhängersteuerventils 15' mit Taktventilen. Links der Trennlinie 24 ist der Aufbau mit einem herkömmlichen, pneumatischen Anhängersteuerventil identisch. Rechts der Trennlinie 24 besteht die erfindungsgemäße Steuerung aus einer Magnetventileinrichtung 25, 27. Diese weist ein elektromagnetisch betätigbares 2/2-Wegeventil 25 auf, das eine Durchfluß-Nullstellung V und eine Sperrstellung IV hat. Von diesem nachfolgend als Magnetventil 25 bezeichneten Ventil führt eine Verbindung 26 zu einem 4/3-Wegeventil 27 mit elektromagnetischer Betätigung. Zu dem nachfolgend als Magnetventil 27 bezeichneten Ventil führt auch eine an die Leitung 33 angeschlossene Vorratsleitung 31. Von diesem Magnetventil 27 führt weiter eine Verbindung 28 weg, in welcher der Drucksensor 29 angeordnet ist. Das Ende der Verbindung 28 mündet in der Kupplung 18 der Anhängerbremsleitung 17. Das andere, mit der Vorratsleitung 19 verbundene Kupplungsteil 30 ist am Anhängersteuerventil 15' angeordnet.

Solange die Kraft zwischen Zugfahrzeug und Anhängerfahrzeug beim Bremsen einen bestimmten Grenzwert nicht überschreitet, sind die Magnetventile 25 und 27 stromlos; das Magnetventil 27 ist in der in Figur 2 gezeigten Stellung II und das Magnetventil 25 in Stellung V. Der Druck vom Betriebsbremsventil 11, der von der Steuerleitung 22 kommt, wird zum Anhängerfahrzeug durchgesteuert. Wird beispielsweise die Deichsel- bzw. Sattelschubkraft zu groß, sperrt das Magnetventil 25 und das Magnetventil 27 erhöht in Stellung III den Druck in der Anhängerbremsleitung 17, weil der Anhänger 2 stärker abgebremst werden soll. Entsprechend kann der Druck in der Bremsleitung 17 in der Stellung I des Magnetventils 27 vermindert werden, um den Anhänger 2 weniger stark abzubremsen. Wird nicht gebremst, d.h. das Betriebsbremsventil 11 nicht betätigt, sind die Magnetventile 25 und 27 nicht angesteuert, d.h. auf Durchgang geschaltet. Diese Durchgangsstellung V bzw. II stellt sich auch dann ein, wenn die Stromversorgung ausfällt und der Druck von der Steuerleitung 22 durchsteuerbar ist. Die Steuerleitung 22 ist die Leitung, die in Verbindung mit einem pneumatischen Rückhaltkreis steht. Fällt dieser pneumatische Rückhaltkreis aus, so kann durch die Magnetventile 25 und 27 der Anhänger 2 völlig unabhängig davon gesteuert werden.

Der Bruch der Vorratsleitung 19 zum Anhängerfahrzeug 2 hat, wie beim herkömmlichen, pneumatisch 2-kreisigen Anhängersteuerventil, die Vollbremsung des Anhängers zur Folge. Bricht die Bremsleitung 17 zum Anhänger 2, so führt das noch nicht zu einem sofortigen Druckabfall in der Vorratsleitung 19, denn aufgrund der ansteigenden Deichsel- oder Sattelschubkraft sperrt das Magnetventil 25 die vom Pneumatikteil des Anhängersteuerventils 15' kommende Verbindung 32 ab, während das Magnetventil 27 in die Stellung III geschaltet wird. Die Vorratsleitung 19 wird daher nicht entlüftet und der Anhänger 2 nicht gebremst. Damit dieser gefährliche Zustand nicht eintritt, gibt es zwei Abhilfemaßnahmen.

Die erste Abhilfe besteht darin, daß eine Logik in der elektronischen Steuerung 6 erkennt, daß die Deichsel- bzw. Sattelschubkraft ansteigt, obwohl eigentlich aufgrund der Stellung IV bzw. III der Magnetventile 25 bzw. 27 die Deichsel- bzw. Sattelschubkraft abfallen müßte, und schaltet beide Magnetventile 25 und 27 auf Durchgang in die Stellung V bzw. II. Diese Abhilfe benötigt eine gewisse Zeit, da sich erst eine Deichsel- bzw. Sattelschubkraft aufbauen muß, und ist daher nicht optimal.

Die zweite Abhilfe besteht darin, daß der Drucksensor 29 oder Druckwächter, der in der Bremsleitung 17 zum Anhänger 2 nach den Magnetventilen 25 und 27 angeordnet ist, den fehlenden Druckaufbau erfaßt. Daraufhin schaltet die elektronische Steuerung 6 die Magnetventile 25 und 27 auf Durchgang in die Stellung V bzw. II. Dadurch wird die Vorratsleitung 19 über die Verbindungen 32, 26, 28 und die gebrochene Bremsleitung 17 entlüftet und die Anhängerbremsung ausgelöst.

## Patentansprüche

1. Druckluftbremseinrichtung für Kraftfahrzeuge. insbesondere Zugfahrzeug mit Anhängerfahrzeug, mit einem den Druck in einer Anhängerbremsleitung steuernden Anhängersteuerventil, welches mittels eines Bremswertgebers über mindestens zwei Bremssteuerkreise des Zugfahrzeugs, von denen einer pneumatisch gesteuert ist ansteuerbar ist, einem mit der Anhängerbremsleitung verbindbaren Anhängerbremsventil sowie mit einer Einrichtung zum Messen der an einer mechanischen Kupplungsverbindung der Fahrzeuge auftretenden Kräfte und kraftabhängigen Korrigieren des Druckes in der Anhängerbremsleitung, dadurch gekennzeichnet, daß der andere der beiden Bremssteuerkreise durch ein im Bremswertgeber (11) gebildetes, kraftabhängig korrigierbares elektrisches Signal aktivierbar ist, mit dem eine Betätigung des Anhängersteuerventils (15) durch in das Ventil integrierte elektrische Mittel hervorrufbar ist.

2. Druckluftbremsanlage nach Anspruch 1, dadurch gekennzeichnet, daß das Anhängerbremsventil (15) durch ein elektromagnetisch oder elektromotorisch ansteuerbares Vorsteuerventil (35) betätigbar ist.

3. Druckluftbremsanlage nach Anspruch 1, dadurch gekennzeichnet, daß die elektrischen Mittel von einer Magnetventileinrichtung gebildet sind, die bei Kräften bis zu einem bestimmten Grenzwert zwischen Zug- und Anhängerfahrzeug stromlos offen ist und den Druck des pneumatischen (Rückhalt-)Kreises im Anhängersteuerventil (15) durchsteuert.

4. Druckluftbremsanlage nach Anspruch 3, dadurch gekennzeichnet, daß die Magnetventileinrichtung (25, 27) aus zwei einzelnen Magnetventilen (25, 27) besteht, und daß bei Überschreitung des Grenzwertes das Magnetventil (25) in Sperrstellung geht, und das Magnetventil (27) den Druck in der Anhängerbremsleitung (17) durch eine bestimmte Stellung erhöht oder durch eine bestimmte Stellung verringert.

5. Druckluftbremseinrichtung nach Anspruch 4, dadurch gekennzeichnet, daß bei Ausfall der Spannungsversorgung die Magnetventile (25, 27) auf Durchgang (II, V) geschaltet sind, und das Anhängerfahrzeug (2) durch den pneumatischen (Rückhalt-)Kreis (II) gesteuert wird.

6. Druckluftbremseinrichtung nach einem der Ansprüche 3 bis 5, mit einer Deichsel (5) als Kupplungsverbindung (Anhängerkupplung 3) der Fahrzeuge (1, 2), dadurch gekennzeichnet, daß bei Bruch der Bremsleitung (17) eine Logikschaltung mit einem Steuergerät (6) erkennt, daß im Falle des Bremsens die Deichselkraft trotz deichselkraftvermindernder Stellung der Magnetventile (25, 27) ansteigt.

7. Druckluftbremseinrichtung nach Anspruch 6, dadurch gekennzeichnet, daß ein Drucksensor oder Druckwächter (29) verwendet ist, der in der Bremsleitung (17) hinter der Magnetventileinrichtung (25, 27) angeordnet ist, und der über eine Leitung (16) an das Steuergerät (6) angeschlossen ist.

## Claims

1. Compressed air braking arrangement for motor vehicles, in particular tractor vehicle with trailer vehicle, the said arrangement having: a trailer control valve which controls the pressure in a trailer braking line and can be triggered by means of a braking value transmitter via at least two braking control circuits of the tractor vehicle, one of which circuits is pneumatically controlled; a trailer braking valve which can be connected to the trailer braking line; and also an arrangement for measuring the forces occurring at a mechanical coupling connection of the vehicles and for correcting the pressure in the trailer braking line in a force-dependent manner, characterised in that the other of the two braking control circuits can be activated by an electrical signal which is formed in the braking value transmitter (11) and can, if necessary, be corrected in a force-dependent manner and with the aid of which actuation of the trailer control valve (15) can be brought about by electrical means integrated into the valve.

2. Compressed air braking installation according to claim 1, characterised in that the trailer braking valve (15) can be actuated by a precontrol valve (35) which can be triggered electromagnetically or electromotively.

3. Compressed air braking installation according to claim 1, characterised in that the electrical means are formed by a magnetic valve arrangement which is open, in a manner devoid of current, at forces up to a certain limit value between the tractor and trailer vehicles, and allows through the pressure of the pneumatic (restraint) circuit in the trailer control valve (15).

4. Compressed air braking installation according to claim 3, characterised in that the magnetic valve arrangement (25, 27) consists of two individual magnetic valves (25, 27) and that, when the limit value is exceeded, the magnetic valve (25) goes into the blocking position and the magnetic valve (27) increases the pressure in the trailer braking line (17) by means of a certain position or reduces it by means of a certain position.

5. Compressed air braking arrangement according to claim 4, characterised in that, in the event of failure of the voltage supply, the magnetic valves (25, 27) are switched to transition (II, V) and the trailer vehicle (2) is controlled by the pneumatic (restraint) circuit (II).

6. Compressed air braking arrangement according to one of claims 3 to 5, with a draw bar (5) as the coupling connection (trailer coupling 3) of the vehicles (1, 2), characterised in that, in the event of the braking line (17) being broken, a logic circuit with a control apparatus (6) recognises that, when braking occurs, the draw bar force rises in spite of the magnetic valves (25, 27) being in a position that diminishes the draw bar force.

7. Compressed air braking arrangement according to claim 6, characterised in that a pressure sensor or pressure monitor (29) is used which is disposed in the braking line (17) behind the magnetic valve arrangement (25, 27) and is connected to the control apparatus (6) via a line (16).

## Revendications

1. Installation de freinage à air comprimé pour des véhicules utilitaires, notamment un véhicule tracteur avec une remorque comportant un robinet de commande de frein de remorque commandant la pression dans la conduite de frein de remorque robinet qui est commandé, par un transmetteur de valeur de frein par au moins deux circuits de commande de frein du véhicule tracteur dont l'un est pneumatique avec une vanne de frein de remorque reliée à la conduite de frein de remorque ainsi qu'une installation de mesure des efforts exercés sur un attelage mécanique des véhicules corrigeant la pression dans la conduite de frein de remorque en fonction des efforts, installation
caractérisée en ce que
l'autre des deux circuits de commande de frein peut être activé par un signal électrique du transmetteur de valeur de freinage (11), corrigé en fonction des efforts, qui peut actionner le robinet de commande de remorque de frein (15) par un moyen électrique intégré.

2. Installation de freinage à air comprimé selon la revendication 1,
caractérisée en ce que
le robinet de commande de frein de remorque (15) est actionné par une vanne-pilote de commande (35) à électromagnétique ou électromotorisée.

3. Installation de freinage à air comprimé selon la revendication 1,
caractérisée en ce que
les moyens électriques sont constitués par une installation à électrovannes qui est ouverte sans courant jusqu'à ce que les efforts entre le véhicule tracteur et la remorque atteignent une valeur limite, et qui transmet la pression du circuit pneumatique (circuit de retenue) dans le robinet de commande de frein de remorque (15).

4. Installation de freinage à air comprimé selon la revendication 3,
caractérisée en ce que
l'installation à électrovannes (25, 27) se compose de deux électrovannes distinctes (25, 27) et, en cas de dépassement de la valeur limite, l'électrovanne (25) passe en position de blocage tandis que l'électrovanne (27) augmente la pression dans la conduite de frein de remorque (17) en passant dans une certaine position ou la diminue en passant dans une certaine position.

5. Installation de freinage à air comprimé selon la revendication 4,
caractérisée en ce qu'
en cas de défaillance de la tension d'alimentation, les électrovannes (25, 27) sont commutées sur l'état passant (II, V) et la remorque (2) est commandée par le circuit pneumatique (circuit de retenue) (II).

6. Installation de freinage à air comprimé selon l'une des revendications 3 à 5, comportant un timon (5) comme attelage (attelage de remorque 3) pour les véhicules (1, 2), installation
caractérisée en ce qu'
en cas de rupture de la conduite de frein (17), un circuit logique de l'appareil de commande (6) reconnaît qu'en cas de freinage, les efforts au niveau du timon augmentent, bien que les électrovannes (25, 27) soient dans une position correspondant à une réduction des efforts au niveau du timon.

7. Installation de freinage à air comprimé selon la revendication 6,
caractérisée par
un capteur de pression ou contrôleur de pression (29) monté dans la conduite de frein (17) en aval de l'installation à électrovannes (25, 27), et relié à l'appareil de commande (6) par une ligne (16).
